(19) **Europäisches Patentamt**
**European Patent Office**
**Office européen des brevets**

(11) **EP 4 001 230 A1**

(12) **EUROPEAN PATENT APPLICATION**
published in accordance with Art. 153(4) EPC

(43) Date of publication:
**25.05.2022 Bulletin 2022/21**

(21) Application number: **20841249.4**

(22) Date of filing: **19.02.2020**

(51) International Patent Classification (IPC):
$C03B\ 33/033$ [(2006.01)]  $C03B\ 33/07$ [(2006.01)]
$C03B\ 33/09$ [(2006.01)]  $B28D\ 5/00$ [(2006.01)]
$B23K\ 26/364$ [(2014.01)]  $G02B\ 5/30$ [(2006.01)]
$G02F\ 1/1335$ [(2006.01)]

(52) Cooperative Patent Classification (CPC):
**B23K 26/364; B28D 5/00; C03B 33/033;
C03B 33/07; C03B 33/09; G02B 5/30; G02F 1/1335**

(86) International application number:
**PCT/JP2020/006412**

(87) International publication number:
**WO 2021/009961 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2019 JP 2019131509**

(71) Applicant: **Nitto Denko Corporation
Ibaraki-shi, Osaka 567-8680 (JP)**

(72) Inventors:
• **KANNO, Toshihiro
  Ibaraki-shi, Osaka 567-8680 (JP)**
• **SHINOZAKI, Takahiro
  Ibaraki-shi, Osaka 567-8680 (JP)**
• **NAKAI, Kota
  Ibaraki-shi, Osaka 567-8680 (JP)**
• **MATSUO, Naoyuki
  Ibaraki-shi, Osaka 567-8680 (JP)**

(74) Representative: **Grünecker Patent- und
Rechtsanwälte
PartG mbB
Leopoldstraße 4
80802 München (DE)**

(54) **METHOD FOR DIVIDING COMPOSITE MATERIAL**

(57) To provide a method that is capable of dividing a composite material in which a brittle material layer and a resin layer are laminated, without generating a crack in an end face of the brittle material layer.

This invention is a method for dividing a composite material 10 in which a brittle material layer 1 and a resin layer 2 are laminated, including: a resin removing step of irradiating the resin layer with a laser beam L1 oscillated from a $CO_2$ laser source 20 along scheduled dividing lines DL of the composite material to form a processing groove 25 along the scheduled dividing lines; and after the resin removing step, a brittle material removing step of irradiating the brittle material layer with a laser beam L2 oscillated from an ultrashort pulsed laser source 30 along the scheduled dividing lines to form a processing mark 11 along the scheduled dividing lines. In the resin removing step, in a region IS where the scheduled dividing lines intersect, the laser beam oscillated from the $CO_2$ laser source is not irradiated multiple times, or an irradiation amount of the laser beam is decreased relative to an irradiation amount in a region other than a region where the scheduled dividing lines intersect.

EP 4 001 230 A1

Figure 1A

Figure 1B

Figure 1C

**Description**

[Technical Field]

The present invention relates to a method for dividing a composite material in which a brittle material layer and a resin layer are laminated. In particular, the present invention relates to a method that is capable of dividing a composite material without causing a crack in an end face of the brittle material layer.

[Background Art]

In recent years, in addition to progress in achieving increasingly thinner and higher definition liquid crystal panels, liquid crystal panels that have a touch sensor function on the screen to impart diversity to interfaces are being used in a wide range of fields from mobile phones to information displays.

A commonly used liquid crystal panel with a touch sensor function is a liquid crystal panel in which a film or glass having a sensor function is laminated on a polarizing film, and tempered glass referred to as a "front plate" is arranged on the outermost surface via a thick adhesive layer (OCA: optical clear adhesive) for filling the level difference on the sensor surface. Recently, from the viewpoint of thinning and weight reduction, liquid crystal panels having an in-cell type liquid crystal cell in which a touch sensor is incorporated into a glass substrate of the liquid crystal cell have appeared.

On the other hand, whilst studies are being conducted with respect to using a component formed of resin as a front plate and providing the resin-made front plate with a high hardness, the current situation is that sufficient hardness has not been obtained. Resin-made front plates also have a problem of inferiority in humidity resistance.

In view of the foregoing, a film-shaped glass that is referred to as "thin glass" has been attracting attention as a front plate to be arranged on the outermost surface of a liquid crystal panel. The thin glass can be wound in a roll shape, and hence has an advantage in that the thin glass can also be adapted to a so-called "roll-to-roll" production process, and a glass polarizing film in which the thin glass is integrated with a polarizing film has been proposed (for example, see Patent Literature 1).

Since a liquid crystal panel with a touch sensor function can be obtained merely by bonding the glass polarizing film to an in-cell type liquid crystal cell, the production process can be made much simpler in comparison to a common liquid crystal panel that uses tempered glass as a front plate.

In this connection, as a method for dividing a composite material in which a brittle material layer formed from glass and a resin layer formed from a polarizing film or the like are laminated as described above, into a desired shape and dimensions according to the intended application, a method in which the resin layer is subjected to laser beam processing, and the brittle material layer is processed with a mechanical tool is conceivable (for example, see Patent Literature 2).

However, according to studies conducted by the present inventors it has been found that processing the brittle material layer with a mechanical tool after the resin layer has been subjected to laser beam processing may create a crack in the end face of the brittle material layer.

Here, there is a known technique that performs precision processing of a brittle material by irradiating the brittle material such as glass (for example, see Patent Literature 3) with a laser beam (ultrashort pulsed laser beam) oscillated from an ultrashort pulsed laser source, which is different from a laser source used in the aforementioned laser beam processing. The processing technique that uses an ultrashort pulsed laser beam as described in Patent Literature 3 is excellent in productivity and is also excellent in quality without causing a crack in an end face after processing.

However, although the processing technique that uses an ultrashort pulsed laser beam is effective for a single body of brittle material such as glass, using the processing technique for collectively dividing a composite material in which a brittle material layer and a resin layer are laminated is difficult, because the processing technique leads to a decrease in the quality of end faces after dividing. For example, even if an ultrashort pulsed laser beam is irradiated from the brittle material layer side of a composite material, an end face of the resin layer will be subjected to thermal degradation by the ultrashort pulsed laser beam that is not consumed when removing the brittle material forming the brittle material layer and is transmitted to the resin layer side.

Non Patent Literature 1 discloses that in the processing technique utilizing an ultrashort pulsed laser beam, a filamentation phenomenon of the ultrashort pulsed laser beam is utilized, and a multi-focus optical system or a Bessel beam optical system is applied for the ultrashort pulsed laser source.

[Citation List]

[Patent Literature]

[Patent Literature 1] WO 2013-175767
[Patent Literature 2] JP2011-178636A
[Patent Literature 3] JP6239461B

[Non Patent Literature]

[Non Patent Literature 1] John Lopez, et al., "GLASS CUTTING USING ULTRASHORT PULSED BESSEL BEAMS", [online], October 2015, International Congress on Applications of Lasers & Electro-Optics (ICALEO), [searched on July 8, 2019], the Internet (URL: https: //www.researchgate.net/publication/284617626_GLASS_CUTTING_USIN G_ULTRASHORT_PULSED_BESSEL_BEAMS)

[Summary of Invention]

[Technical Problem]

The present invention has been made to solve the problem of the prior art that is described above, and an objective of the present invention is to provide a method that is capable of dividing a composite material in which a brittle material layer and a resin layer are laminated, without generating a crack in an end face of the brittle material layer.

[Solution to Problem]

To solve the above problem, with respect to the technique disclosed in the aforementioned Patent Literature 2, the present inventors considered applying a method that, instead of the method that processes a brittle material layer using a mechanical tool, processes a brittle material layer using an ultrashort pulsed laser beam as disclosed in the aforementioned Patent Literature 3.
However, the present inventors found that, similarly to the method disclosed in Patent Literature 2, when the brittle material layer is processed using an ultrashort pulsed laser beam after the resin layer has been subjected to laser beam processing, in some cases a crack occurs in an end face of the brittle material layer.
Therefore, the present inventors conducted diligent investigations to clarify the reason why a crack occurs, and as a result the present inventors found that a region where a crack occurs in an end face of the brittle material layer is a region where scheduled dividing lines of the composite material intersect, and that the crack is caused by heat damage being applied to the brittle material layer when a laser beam for removing the resin layer is irradiated in the region where the scheduled dividing lines intersect.
The present invention was completed based on the above findings of the present inventors.
That is, to solve the above problem, the present invention provides a method for dividing a composite material in which a brittle material layer and a resin layer are laminated, the method including: a resin removing step of irradiating the resin layer with a laser beam oscillated from a laser source along scheduled dividing lines of the composite material to remove resin forming the resin layer, to thereby form a processing groove along the scheduled dividing lines; and after the resin removing step, a brittle material removing step of irradiating the brittle material layer with a laser beam oscillated from an ultrashort pulsed laser source along the scheduled dividing lines to remove a brittle material forming the brittle material layer, to thereby form a processing mark along the scheduled dividing lines, wherein in the resin removing step, in a region where the scheduled dividing lines intersect, the laser beam oscillated from the laser source is not irradiated multiple times, or an irradiation amount of the laser beam is decreased relative to an irradiation amount of the laser beam in a region other than a region where the scheduled dividing lines intersect.
According to the method according to the present invention, after the processing groove is formed along the scheduled dividing line by removing resin forming the resin layer in the resin removing step, in the brittle material removing step the processing mark is formed along the same scheduled dividing line by removing the brittle material forming the brittle material layer. After the resin removing step and the brittle material removing step, it is possible to divide the composite material relatively easily by, for example, applying an external force to the composite material along the scheduled dividing line.
According to one aspect of the method according to the present invention, in the resin removing step, since the laser beam oscillated from the laser source is not irradiated multiple times in a region where scheduled dividing lines intersect (for example, the output of the laser beam is controlled to 0% when the laser beam is about to be scanned for the second time or later in an intersection region of the scheduled dividing lines), heat damage applied to the brittle material layer decreases, and it is difficult for a crack to occur in an end face of the brittle material layer (end face in the vicinity of the intersection region of the scheduled dividing lines) when forming the processing mark with the laser beam oscillated from the ultrashort pulsed laser source.

Further, according to another aspect of the method according to the present invention, in the resin removing step, in a region where scheduled dividing lines intersect, the irradiation amount of the laser beam is decreased relative to the irradiation amount in a region other than a region where the scheduled dividing lines intersect. Specifically, for example, when the laser beam is scanned for the second time or later in an intersection region of the scheduled dividing lines, the laser beam is controlled such that the output is made lower than the output of the time during which the laser beam was scanned in the intersection region for the first time (the output of the laser beam is not lowered in a region other than a region where scheduled dividing lines intersect). According to this aspect also, heat damage applied to the brittle material layer decreases, and it is difficult for a crack to occur in an end face of the brittle material layer when forming the processing mark with the laser beam oscillated from the ultrashort pulsed laser source.

Note that, in the method according to the present invention, the phrase "irradiating the resin layer with a laser beam along a scheduled dividing line of the composite material" means that the resin layer is irradiated with a laser beam along a scheduled dividing line as viewed from the thickness direction of the composite material (lamination direction of the brittle material layer and the resin layer). Further, in the method according to the present invention, the phrase "irradiating the brittle material layer with a laser beam along the scheduled dividing line" means that the brittle material layer is irradiated with a laser beam along the scheduled dividing line as viewed from the thickness direction of the composite material (lamination direction of the brittle material layer and the resin layer).

Further, in the method according to the present invention, the kind of the laser source that is used in the resin removing step is not particularly limited as long as resin forming the resin layer can be removed by the oscillated laser beam. However, from the viewpoint that it is possible to increase the relative moving speed (processing speed) of the laser beam with respect to the composite material, it is preferable to use a $CO_2$ laser source or a CO laser source that oscillates a laser beam with a wavelength in the infrared region.

In the method of the present invention, as the processing mark that is formed in the brittle material removing step, for example, perforation-like through holes along the scheduled dividing line can be mentioned as an example. In this case, in order to divide the composite material, a composite material dividing step of dividing the composite material by applying an external force to the composite material along the scheduled dividing line is needed after the brittle material removing step.

However, in the brittle material removing step, if the relative moving speed between the laser beam oscillated from the ultrashort pulsed laser source and the brittle material layer along the scheduled dividing line is set to a low value, or the repetition frequency of the pulse oscillation of the ultrashort pulsed laser source is set to a large value, through holes (long hole) that are integrally connected along the scheduled dividing line will be formed as the processing mark, and therefore the composite material can be divided without necessarily applying an external force along the scheduled dividing line after the brittle material is removed.

A thickness of the brittle material layer is 50 to 150 $\mu$m, for example.

Preferably, in the resin removing step, the resin forming the resin layer is removed in a manner so that a part of the resin remains as a residue at a bottom of the processing groove.

According to the preferable method described above, an advantage is obtained such that, in comparison to a case where the resin forming the resin layer is completely removed along the scheduled dividing line, the heat damage applied to the brittle material layer is further reduced by an amount corresponding to the amount of the residue that remains, and it is thus more difficult for a crack to occur in an end face of the brittle material layer.

Note that, in the preferable method described above, the phrase "resin forming the resin layer" is a concept that also includes a bonding agent which is interposed between the resin layer (main body of the resin layer) and the brittle material layer and bonds these two layers to each other. Accordingly, a mode in which only a bonding agent remains as a "residue" is also included in the preferable method described above.

According to the preferable method described above, a thickness of the residue is 1 to 30 $\mu$m, for example.

Preferably, in the brittle material removing step, the brittle material layer is irradiated with the laser beam oscillated from the ultrashort pulsed laser source from an opposite side to the processing groove formed in the resin removing step.

According to the preferable method described above, because the brittle material layer is irradiated with the laser beam oscillated from the ultrashort pulsed laser source from the opposite side to the processing groove, even if a residue of resin remains at the bottom of the processing groove, unlike a case where the brittle material layer is irradiated with a laser beam oscillated from the ultrashort pulsed laser source from the processing groove side, an appropriate processing mark can be formed on the brittle material layer without being affected by the residue.

The method according to the present invention is suitably used when the brittle material layer includes glass, and the resin layer includes a polarizing film, for example.

[Advantageous Effect of Invention]

According to the present invention, it is possible to divide a composite material in which a brittle material layer and a resin layer are laminated, without generating a crack in an end face of the brittle material layer.

[Brief Description of Drawings]

[Figures 1A to 1C] Figures 1A to 1C are explanatory diagrams for schematically describing procedures of a method for dividing a composite material according to one embodiment of the present invention.
[Figures 2A and 2B] Figures 2A and 2B are explanatory diagrams for schematically describing a procedure of the method for dividing a composite material according to the embodiment of the present invention.
[Figures 3A and 3B] Figures 3A and 3B are explanatory diagrams for schematically describing a procedure of the method for dividing a composite material according to the embodiment of the present invention.
[Figure 4] Figure 4 is a bottom view (view seen from a resin layer side) that schematically illustrates an appearance of a crack that occurred in a method for dividing a composite material according to Reference Example.

[Description of Embodiment]

Hereunder, a method for dividing a composite material according to one embodiment of the present invention is described with reference being made as appropriate to the attached drawings.

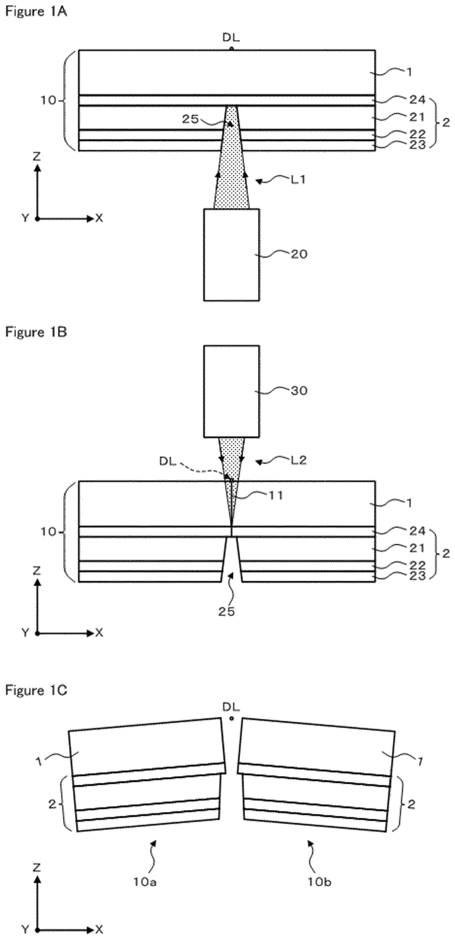

Figures 1 to 3 are explanatory diagrams for schematically describing procedures of a method for dividing a composite material according to one embodiment of the present invention.
Figure 1A is a cross-sectional view illustrating a resin removing step of the dividing method according to the present embodiment, Figure 1B is a cross-sectional view illustrating a brittle material removing step of the dividing method according to the present embodiment, and Figure 1C is a cross-sectional view illustrating a composite material dividing step of the dividing method according to the present embodiment.

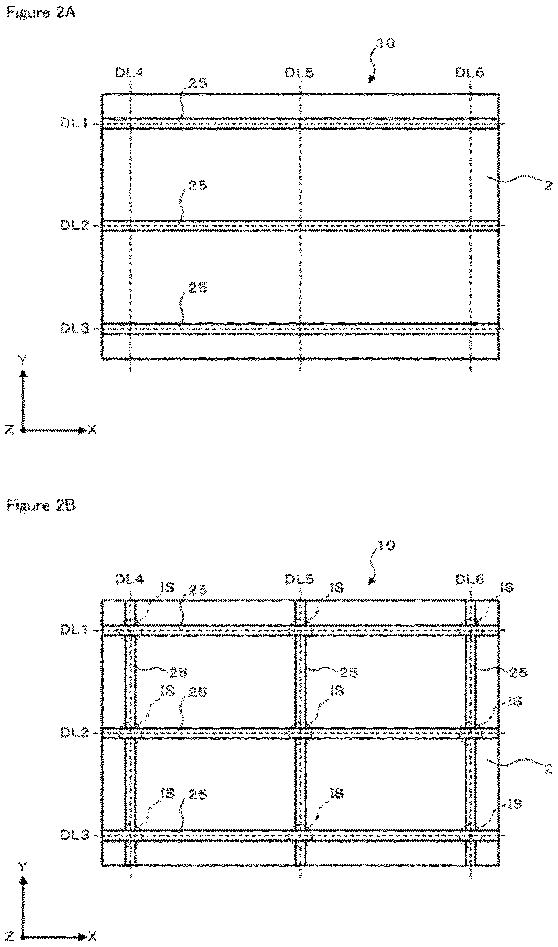

Figures 2A and 2B are bottom views (views seen from a resin layer side) illustrating the resin removing step of the dividing method according to the present embodiment.

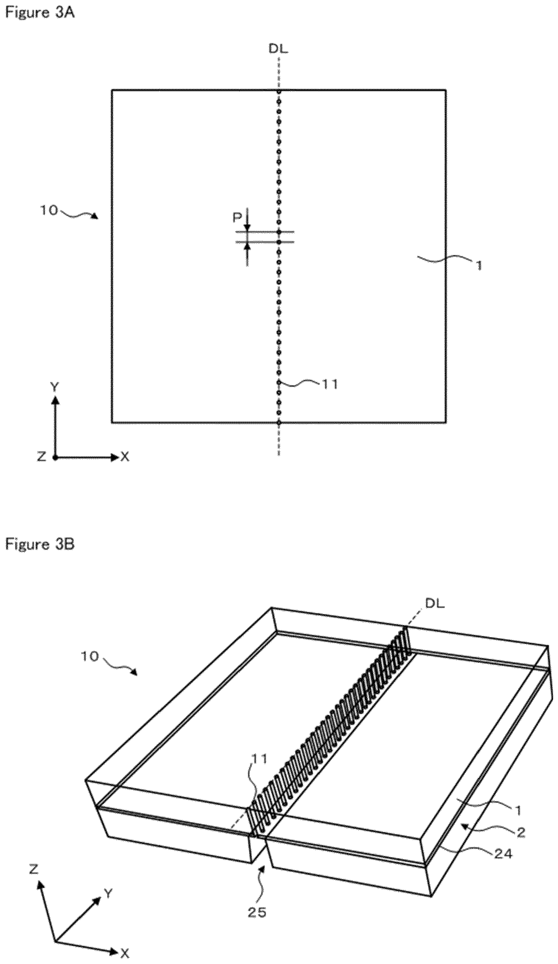

Figure 3A is a plan view (view as seen from a brittle material layer side) illustrating the brittle material removing step of the dividing method according to the present embodiment, and Figure 3B is a perspective view illustrating the brittle material removing step of the dividing method according to the present embodiment.
Note that, in Figures 2A and 2B, illustration of a laser source 20 is omitted. Further, in Figures 3A and 3B, illustration of an ultrashort pulsed laser source 30 is omitted.
The dividing method according to the present embodiment is a method that divides a composite material 10 in which a brittle material layer 1 and a resin layer 2 are laminated, in the thickness direction (lamination direction of the brittle material layer 1 and the resin layer 2; vertical direction (or Z direction) in Figures 1A to 1C).
The brittle material layer 1 and the resin layer 2 are laminated by an arbitrary appropriate method. For example, the brittle material layer 1 and the resin layer 2 can be laminated by a so-called "roll-to-roll method". That is, while conveying the long brittle material layer 1 and a main body (in the present embodiment, a polarizing film 21, a pressure-sensitive adhesive 22 and a release liner 23 constituting the resin layer 2) of the long resin layer 2 in the longitudinal direction, the brittle material layer 1 and the resin layer 2 can be laminated by bonding the brittle material layer 1 and the resin layer 2 to each other through a bonding agent 24 in a manner so that the longitudinal directions of the brittle material layer 1 and the resin layer 2 are aligned with each other. Further, the brittle material layer 1 and the main body of the resin layer 2 may be laminated after being cut into a predetermined shape, respectively.
Glass and single crystal or polycrystalline silicon can be mentioned as examples of the brittle material forming the brittle material layer 1. Ideally, glass is used.
According to classification by composition, examples of the glass that can be mentioned include soda-lime glass, borate glass, aluminosilicate glass, quartz glass and sapphire glass. Further, according to classification by alkali component, non-alkali glass and low-alkali glass can be mentioned as examples. The content of alkali metal components (for example, $Na_2O$, $K_2O$ and $Li_2O$) in the glass is preferably 15% by weight or less, and more preferably 10% by weight or less.
The thickness of the brittle material layer 1 is preferably 150 μm or less, more preferably is 120 μm or less, and further preferably is 100 μm or less. On the other hand, the thickness of the brittle material layer 1 is preferably 50 μm or more, and more preferably is 80 μm or more. As long as the thickness of the brittle material layer 1 is within this kind of range, it is possible to laminate the brittle material layer 1 and the resin layer 2 together by the roll-to-roll method.

When the brittle material forming the brittle material layer 1 is glass, the light transmittance of the brittle material layer 1 at a wavelength of 550 nm is preferably 85% or more. When the brittle material forming the brittle material layer 1 is glass, the refractive index of the brittle material layer 1 at a wavelength of 550 nm is preferably 1.4 to 1.65. When the brittle material forming the brittle material layer 1 is glass, the density of the brittle material layer 1 is preferably 2.3 $g/cm^3$ to 3.0 $g/cm^3$, and more preferably is 2.3 $g/cm^3$ to 2.7 $g/cm^3$.

When the brittle material forming the brittle material layer 1 is glass, as the brittle material layer 1, a commercially available glass plate may be used as it is, or a commercially available glass plate may be polished to a desired thickness for use. Examples of commercially available glass plates include "7059", "1737" or "EAGLE2000" manufactured by Corning Inc., "AN100" manufactured by Asahi Glass Co., Ltd., "NA-35" manufactured by NH Techno Glass Co., Ltd., "OA-10G" manufactured by Nippon Electric Glass Co., Ltd., and "D263" or "AF45" manufactured by Schott AG.

Examples of the main body of the resin layer 2 that can be mentioned include a single-layer film or a laminated film composed of multiple layers which is formed of polyethylene terephthalate (PET), polyethylene (PE), polypropylene (PP), acrylic resin such as polymethyl methacrylate (PMMA), a cyclic olefin polymer (COP), a cyclic olefin copolymer (COC), a polycarbonate (PC), urethane resin, a polyvinyl alcohol (PVA), a polyimide (PI), polytetrafluoroethylene (PTFE), polyvinyl chloride (PVC), polystyrene (PS), triacetylcellulose (TAC), polyethylene naphthalate (PEN), ethylene vinyl acetate (EVA), a polyamide (PA), silicone resin, epoxy resin, a liquid crystal polymer, or a plastic material such as various kinds of resin foam.

When the main body of the resin layer 2 is a laminated film composed of multiple layers, various kinds of pressure-sensitive adhesive such as acrylic pressure-sensitive adhesives, urethane pressure-sensitive adhesives, and silicone pressure-sensitive adhesives, or bonding agents may be interposed between layers.

Further, an electroconductive inorganic membrane composed of indium tin oxide (ITO), Ag, Au, or Cu or the like may be formed on the surface of the main body of the resin layer 2.

The dividing method according to the present embodiment is, in particular, favorably used when the main body of the resin layer 2 is an optical film of various kinds such as a polarizing film or a phase difference film used for a display.

The thickness of the main body of the resin layer 2 is preferably 20 to 500 $\mu$m.

Note that, in the example illustrated in Figures 1A to 1C, an example is shown in which the main body of the resin layer 2 is a laminated film in which the polarizing film 21 and the release liner 23 are laminated via the pressure-sensitive adhesive 22. The main body of the resin layer 2 is laminated with the brittle material layer 1 via the bonding agent 24. In the present embodiment, the combination of the main body (the polarizing film 21, the pressure-sensitive adhesive 22 and the release liner 23) of the resin layer 2 and the bonding agent 24 is referred to as the "resin layer 2".

The polarizing film 21 has a polarizer, and a protective film disposed on at least one side of the polarizer. The thickness of the polarizer is not particularly limited, and an appropriate thickness can be adopted according to the purpose. The thickness of the polarizer is typically within the range of about 1 to 80 $\mu$m. In one mode, the thickness of the polarizer is preferably 30 $\mu$m or less. The polarizer is an iodine-based polarizer. More specifically, the aforementioned polarizer can be made from a polyvinyl alcohol-based resin film containing iodine.

The following methods 1, 2 and the like can be mentioned as examples of a method for producing the polarizer constituting the polarizing film 21.

(1) Method 1: A method that stretches and dyes a polyvinyl alcohol-based resin film alone.
(2) Method 2: A method that stretches and dyes a laminate (i) having a resin base material and a polyvinyl alcohol-based resin layer.

The method 1 is a method that is well-known and conventionally used in the art, and hence a detailed description thereof will be omitted here.

The method 2 preferably includes a step of stretching and dyeing the laminate (i) having the resin base material and the polyvinyl alcohol-based resin layer formed on one side of the resin base material to produce a polarizer on the resin base material. The laminate (i) can be formed by applying an application liquid containing a polyvinyl alcohol-based resin onto the resin base material and drying the applied liquid. In addition, the laminate (i) may be formed by transferring a polyvinyl alcohol-based resin film onto the resin base material. The method 2 is described in detail in, for example, JP2012-73580A, whose contents are incorporated herein as a reference.

The protective film constituting a part of the polarizing film 21 is disposed on one side or both sides of the polarizer. A triacetylcellulose-based film, an acrylic-based film, a cycloolefin-based film, a polyethylene terephthalate-based film or the like can also be used as the protective film. Note that, as appropriate, the polarizing film 21 may be further provided with a phase difference film. The phase difference film can have any appropriate optical properties and/or mechanical properties depending on the intended purpose.

For example, a polyester-based bonding agent, a polyurethane-based bonding agent, a polyvinyl alcohol-based bonding agent, or an epoxy-based bonding agent can be used as the bonding agent 24. In particular, from the viewpoint that satisfactory adherence is obtained, use of an epoxy-based bonding agent is preferable.

When the bonding agent 24 is a thermosetting bonding agent, peeling resistance force can be exhibited by heating and curing (setting) the bonding agent 24. Further, when the bonding agent 24 is a photocurable bonding agent such as an ultraviolet curable bonding agent, peeling resistance force can be exhibited by irradiating the bonding agent 24 with light such as ultraviolet light to cure the bonding agent 24. In addition, when the bonding agent 24 is a moisture curable bonding agent, since the bonding agent 24 can be cured by reacting with moisture or the like in the atmosphere, even if the bonding agent 24 is left to stand, the bonding agent 24 will cure and peeling resistance force can be exhibited.

For example, a commercially available bonding agent may be used as the bonding agent 24, or various kinds of curable resin may be dissolved or dispersed in a solvent to prepare a bonding agent solution (or dispersion).

The thickness of the bonding agent 24 is preferably 10 $\mu$m or less, more preferably is 1 to 10 $\mu$m, further preferably is 1 to 8 $\mu$m, and particularly preferably is 1 to 6 $\mu$m.

The dividing method according to the present embodiment includes the resin removing step, the brittle material removing step, and the composite material dividing step. Hereinafter, each step will be described successively.

<Resin removing step>

As illustrated in Figure 1A, in the resin removing step, the resin layer 2 is irradiated with a laser beam L1 oscillated from a laser source 20 along the scheduled dividing line of the composite material 10 to remove the resin forming the resin layer 2. By this means, a processing groove 25 is formed along the scheduled dividing line.

In the example illustrated in Figures 1A to 1C, 3A and 3B, for convenience, a case is illustrated in which, out of two orthogonal directions (X direction and Y direction) in a plane (X-Y two-dimensional plane) of the composite material 10, a straight line DL extending in the Y direction is the scheduled dividing line. In the example shown in Figures 2A and 2B, a case is illustrated in which straight lines DL1 to DL3 extending in the X direction and straight lines DL4 to DL6 extending in the Y direction are scheduled dividing lines. Hereinafter, these are collectively referred to as a "scheduled dividing line DL".

The scheduled dividing line DL can be actually drawn on the composite material 10 as a visually recognizable indication, and it is also possible to input the coordinates of the scheduled dividing line DL in advance into a control device (not shown) which controls the relative positional relationship between the laser beam L1 and the composite material 10 on the X-Y two-dimensional plane. The scheduled dividing line DL shown in Figures 1 to 3 is a virtual line whose coordinates are input in advance to the control device and which is not actually drawn on the composite material 10. Note that the scheduled dividing line DL is not limited to a straight line, and may be a curved line. By determining the scheduled dividing line DL according to the application of the composite material 10, the composite material 10 can be divided into any shape and dimensions according to the application.

In the present embodiment, a $CO_2$ laser source which oscillates a laser beam L1 having a wavelength of 9 to 11 $\mu$m in the infrared region is used as the laser source 20.

However, the present invention is not limited to this, and it is also possible to use a CO laser source which oscillates a laser beam L1 having a wavelength of 5 $\mu$m as the laser source 20.

Further, as the laser source 20, it is also possible to use pulsed laser sources that oscillate visible light and ultraviolet rays (UV). Examples of pulsed laser sources that oscillate visible light and UV that can be mentioned include those which oscillate a laser beam L1 having a wavelength of 532 nm, 355 nm, 349 nm, or 266 nm (higher-order harmonics of Nd: YAG, Nd: YLF, or a solid laser source using YVO4 as a medium), an excimer laser source which oscillates a laser beam L1 having a wavelength of 351 nm, 248 nm, 222 nm, 193 nm or 157 nm, and an F2 laser source which oscillates a laser beam L1 having a wavelength of 157 nm.

Further, as first laser source 20, it is also possible to use a pulsed laser source which oscillates a laser beam L1 having a wavelength outside the ultraviolet region and having a pulse width of femtosecond or picosecond order. Using the laser beam L1 oscillated from this pulsed laser source makes it possible to induce ablation processing based on the multiphoton absorption process.

In addition, as the laser source 20, it is possible to use a semiconductor laser source or a fiber laser source which oscillates a laser beam L1 having a wavelength in the infrared region.

As described above, since a $CO_2$ laser source is used as the laser source 20 in the present embodiment, hereunder the laser source 20 is referred to as a "$CO_2$ laser source 20".

As a mode of irradiating the laser beam L1 along the scheduled dividing line of the composite material 10 (a mode of scanning the laser beam L1), it is conceivable, for example, that a sheet-like composite material 10 is placed on an X-Y dual-axis stage (not shown) and fixed (for example, fixed by suction) thereto, and the X-Y dual-axis stage is driven by a control signal from the control device so as to change the relative position of the composite material 10 on the X-Y two-dimensional plane with respect to the laser beam L1. Further, it is also conceivable to change the position on the X-Y two-dimensional plane of the laser beam L1 with which the composite material 10 is irradiated, by fixing the position of the composite material 10 and deflecting the laser beam L1 oscillated from the $CO_2$ laser source 20 by using a galvanometer mirror or a polygon mirror driven by a control signal from the control device. In addition, it is also possible to use a combination of both the scanning of the composite material 10 by use of the aforementioned X-Y dual-axis stage and the scanning of the laser beam L1 by use of a galvanometer mirror or the like.

The oscillation mode of the $CO_2$ laser source 20 may be pulse oscillation or may be continuous oscillation. The spatial intensity distribution of the laser beam L1 may be a Gaussian distribution, or may be shaped into a flat-top distribution by using a diffractive optical element (not shown) or the like to suppress heat damage to the brittle material layer 1 that is other than the removal target of the laser beam L1. There is no restriction on the polarization state of the laser beam L1, and it may be any of linear polarization, circular polarization, and random polarization.

As a result of the resin layer 2 being irradiated with the laser beam L1 along the scheduled dividing line DL of the composite material 10, among the resin forming the resin layer 2, a local temperature increase associated with infrared light absorption occurs in the resin which has been irradiated with the laser beam L1, which causes the relevant resin to scatter, and thereby the relevant resin is removed from the composite material 10 and the processing groove 25 is formed in the composite material 10. In order to suppress the occurrence of a situation in which the debris of the resin which was removed from the composite material 10 re-adheres to the composite material 10, it is preferable to provide a dust collection mechanism in the vicinity of the scheduled dividing line DL. To inhibit the groove width of the processing groove 25 from becoming too large, preferably the laser beam L1 is condensed so that a spot diameter thereof at the irradiation position on the resin layer 2 is 300 $\mu$m or less, and more preferably the laser beam L1 is condensed so that the spot diameter is 200 $\mu$m or less.

Note that, according to findings of the present inventors, in the case of a resin removing method based on the principle of local temperature increase associated with infrared light absorption of the resin irradiated with the laser beam L1, it is possible, regardless of the type of the resin and the layer structure of the resin layer 2, to roughly estimate the input energy required to form the processing groove 25 by the thickness of the resin layer 2. Specifically, the input energy required to form the processing groove 25, which is represented by the following Formula (1), can be estimated by the following Formula (2) based on the thickness of the resin layer 2.

$$\text{Input energy [mJ/mm]} = \text{Average power of laser beam L1}$$

$$\text{[mW]/processing speed [mm/sec]} \quad (1)$$

$$\text{Input energy [mJ/mm]} = 0.5 \times \text{thickness of resin layer 2 [}\mu\text{m]} \quad (2)$$

The input energy to be actually set is preferably set to 20% to 180% of the input energy estimated by the above Formula (2), and more preferably set to 50% to 150% thereof. The reason why a margin is provided for the input energy estimated in this way is to take into consideration that differences may arise with respect to the input energy required to form the processing groove 25 due to differences in thermophysical properties such as the light absorption rate (light absorption rate at the wavelength of the laser beam L1) of the resin forming the resin layer 2 and the melting point and decomposition point of the resin. Specifically, it suffices to determine the appropriate input energy, for example, by preparing a sample of the composite material 10 to which the dividing method according to the present embodiment is applied, and performing a preliminary test to form the processing groove 25 in the resin layer 2 of this sample with a plurality of input energies within the aforementioned preferable range.

The resin removing step of the present embodiment is characterized in that the laser beam L1 oscillated from the laser source 20 is not irradiated multiple times in a region where the scheduled dividing lines DL intersect. Hereunder, this point is specifically described while referring to Figures 2A and 2B.

In the resin removing step of the present embodiment, for example, as illustrated in Figure 2A, by changing the relative position of the composite material 10 on the X-Y two-dimensional plane with respect to the laser beam L1 (scanning the laser beam L1 relatively with respect to the composite material 10), the processing grooves 25 extending in the X direction along each of the scheduled dividing lines DL1 to DL3 are sequentially formed. Next, as illustrated in Figure 2B, by changing the relative position of the composite material 10 on the X-Y two-dimensional plane with respect to the laser beam L1 (scanning the laser beam L1 relatively with respect to the composite material 10), the processing grooves 25 extending in the Y direction along each of the scheduled dividing lines DL4 to DL6 are sequentially formed. At this time, a configuration is adopted so that the laser beam L1 is not irradiated multiple times in regions IS at which the scheduled dividing lines DL intersect (regions surrounded by circles formed of alternate long and short dash lines in Figure 2B). Specifically, as described above, since the coordinates of the scheduled dividing lines DL are input in advance into the control device, the control device can recognize the coordinates of a region IS where the scheduled dividing lines DL intersect. Accordingly, the control device can control the output of the laser beam L1 with which the intersection region IS is irradiated to 0% when the laser beam L1 is about to be scanned for the second time in an intersection region IS of the scheduled dividing lines DL. The same also applies with respect to a case where the laser beam L1 is to be scanned three times or more in an intersection region IS. By this means, in a region IS where the scheduled dividing lines DL intersect, the laser beam L1 oscillated from the laser source 20 is not irradiated multiple times.

Thus, in a region IS where the scheduled dividing lines DL intersect, because the laser beam L1 is not irradiated multiple times, heat damage applied to the brittle material layer 1 is reduced. By this means, an advantage is obtained such that, when forming the processing mark in the brittle material removing step that is described later, it is difficult for a crack to occur in an end face (end face in the vicinity of an intersection region of the scheduled dividing line DL) of the brittle material layer 1.

Note that, as a method for controlling the output of the laser beam L1, for example, a method that performs pulse control of the excitation source of the laser source 20, or a method that turns the output of the laser beam L1 on/off using a mechanical shutter can be used.

Although in the present embodiment a mode is adopted in which, in the resin removing step, the laser beam L1 oscillated from the laser source 20 is not irradiated multiple times in a region IS where the scheduled dividing lines DL intersect, the present invention is not limited thereto, and it is also possible to adopt a mode that, in a region IS where the scheduled dividing lines DL intersect, lowers the irradiation amount of the laser beam L1 relative to the irradiation amount in a region other than a region IS where the scheduled dividing lines DL intersect. Specifically, for example, when the laser beam L1 is scanned in the intersection region IS of the scheduled dividing lines DL for the second time or later, it is possible to perform control to make the output of the laser beam L1 lower than the output when the laser beam L1 was scanned in the intersection region IS for the first time (and to not lower the output of the laser beam L1 in a region other than a region IS where the scheduled dividing lines DL intersect).

Further, the resin removing step of the present embodiment is characterized in that the resin forming the resin layer 2 is removed in a manner so that one part thereof remains as a residue at the bottom of the processing groove 25. The thickness of the residue is preferably 1 to 30 $\mu$m. Although Figure 1A illustrates an example in which only the bonding agent 24 remains as a residue, a mode may also be adopted in which a part of the polarizing film 21 also remains in addition to the bonding agent 24.

By removing the resin in a manner so that a residue remains in the bottom of the processing groove 25 in this way, an advantage is obtained such that, in comparison to a case where the resin forming the resin layer 2 is completely removed along the scheduled dividing line DL, the heat damage applied to the brittle material layer 1 is further reduced by an amount corresponding to the amount of residue remaining in the processing groove 25 and it is thus more difficult for a crack to occur in an end face of the brittle material layer 1.


<Brittle material removing step>

As illustrated in Figure 1B and Figures 3A and 3B, in the brittle material removing step, after the resin removing step, a processing mark 11 along the scheduled dividing line DL is formed by irradiating the brittle material layer 1 with a laser beam (ultrashort pulsed laser beam) L2 oscillated (pulse oscillation) from an ultrashort pulsed laser source 30 along the scheduled dividing line DL, and thereby removing the brittle material forming the brittle material layer 1.

As the mode of irradiating the laser beam L2 along the scheduled dividing line DL (the mode of relatively scanning the laser beam L2), the same mode as the mode of irradiating the laser beam L1 along the scheduled dividing line DL that is described above can be adopted, and hence a detailed description thereof is omitted here.

The brittle material forming the brittle material layer 1 is removed by utilizing the filamentation phenomenon of the laser beam L2 oscillated from the ultrashort pulsed laser source 30, or applying a multi-focus optical system (not shown) or Bessel beam optical system (not shown) to the ultrashort pulsed laser source 30.

Note that the use of the filamentation phenomenon of the ultrashort pulsed laser beam and the application of the multi-focus optical system or the Bessel beam optical system to the ultrashort pulsed laser source are described in the aforementioned Non-Patent Literature 1. Further, a product relating to glass processing in which a multi-focus optical system is applied to an ultrashort pulsed laser source is commercially available from Trumpf Corporation of Germany. Thus, since utilization of the filamentation phenomenon of an ultrashort pulsed laser beam, and application of the multi-focus optical system or the Bessel beam optical system to an ultrashort pulsed laser source are known, detailed description thereof will be omitted here.

The processing mark 11 formed in the brittle material removing step of the present embodiment consists of perforation-like through holes along the scheduled dividing line DL. A pitch P of the through holes is determined by the repetition frequency of pulse oscillation and the relative moving speed (processing speed) of the laser beam L2 with respect to the composite material 10. In order to easily and stably perform the composite material dividing step to be described later, preferably the pitch P of the through holes is set to 10 $\mu$m or less. More preferably, the pitch P is set to 5 $\mu$m or less. The diameter of the through hole is often formed to be 5 $\mu$m or less.

The wavelength of the laser beam L2 oscillated from the ultrashort pulsed laser source 30 is preferably 500 nm to 2500 nm, which exhibits high light transmittance when the brittle material forming the brittle material layer 1 is glass. In order to effectively cause a nonlinear optical phenomenon (multiphoton absorption), the pulse width of the laser beam L2 is preferably 100 picoseconds or less, and more preferably 50 picoseconds or less. The oscillation mode of the laser beam L2 may be single pulse oscillation or multi-pulse oscillation of a burst mode.

In the brittle material removing step of the present embodiment, the brittle material layer 1 is irradiated with the laser beam L2 oscillated from the ultrashort pulsed laser source 30 from the opposite side to the processing groove 25 formed in the resin removing step. In the example illustrated in Figures 1A and 1B, the $CO_2$ laser source 20 is disposed on the lower side in the Z direction with respect to the composite material 10 so as to face the resin layer 2, and the ultrashort pulsed laser source 30 is disposed on the upper side in the Z direction with respect to the composite material 10 so as to face the brittle material layer 1. Then, after the processing groove 25 is formed with the laser beam L1 oscillated from the $CO_2$ laser source 20 in the resin removing step, the oscillation of the laser beam L1 is stopped, and the processing mark 11 is formed with the laser beam L2 oscillated from the ultrashort pulsed laser source 30 in the brittle material removing step.

However, the present invention is not limited to this, and it is also possible to employ a method in which the $CO_2$ laser source 20 and the ultrashort pulsed laser source 30 are both disposed on the same side (upper side or lower side in the Z direction) with respect to the composite material 10, and the upper and lower sides of the composite material 10 are inverted using a known inverting mechanism so that the resin layer 2 faces the $CO_2$ laser source 20 in the resin removing step, and the brittle material layer 1 faces the ultrashort pulsed laser source 30 in the brittle material removing step.

If the laser beam L2 oscillated from the ultrashort pulsed laser source 30 is irradiated from the opposite side to the processing groove 25, even if a residue of the resin remains at the bottom of the processing groove 25, an appropriate processing mark 11 can be formed on the brittle material layer 1 without being affected by the residue.

However, the present invention is not limited to this, and may further include a cleaning step of removing the residue of the resin forming the resin layer 2 by subjecting the processing groove 25 formed in the resin removing step to cleaning by applying various wet-type and dry-type cleaning methods prior to the brittle material removing step. Further, it is also possible to form the processing mark 11 by irradiating the brittle material layer 1 with the laser beam L2 oscillated from the ultrashort pulsed laser source 30 from the processing groove 25 side in the brittle material removing step. If the residue of the resin forming the resin layer 2 is removed in the cleaning step, in the brittle material removing step the laser beam L2 oscillated from the ultrashort pulsed laser source 30 will not be affected by the residue of the resin even if the brittle material layer 1 is irradiated with the laser beam L2 from the processing groove 25 side, and thus an appropriate processing mark 11 can be formed in the brittle material layer 1.


<Composite material dividing step>

As illustrated in Figure 1C, in the composite material dividing step, after the brittle material removing step, the composite material 10 is divided by applying an external force to the composite material 10 along the scheduled dividing line DL. In the example illustrated in Figure 1C, the composite material 10 is divided into composite material pieces 10a and 10b.

The method for applying an external force to the composite material 10 can be exemplified by mechanical breaking (mountain-folding), heating of a portion in the vicinity of the scheduled dividing line DL by an infrared laser beam, excitation by an ultrasonic roller, suction and pulling up by a suction cup, and the like. In the case of dividing the composite material 10 by mountain-folding, it is preferable to apply an external force with the brittle material layer 1 being on the mountain side (with the resin layer 2 being on the valley side) so that tensile stress acts on the brittle material layer 1.

According to the dividing method according to the present embodiment that is described above, after the processing groove 25 is formed along the scheduled dividing line DL by removing resin forming the resin layer 2 in the resin removing step, in the brittle material removing step the processing mark 11 is formed along the same scheduled dividing line DL by removing brittle material forming the brittle material layer 1. Since the processing mark 11 formed in the brittle material removing step of the present embodiment consists of perforation-like through holes along the scheduled dividing line DL and the pitch of the through holes is 10 $\mu$m or less, in the composite material dividing step, the composite material 10 can be divided relatively easily by applying an external force to the composite material 10 along the scheduled dividing line DL.

Further, according to the dividing method according to the present embodiment, in the resin removing step, since the laser beam L1 oscillated from the laser source 20 is not irradiated multiple times on the regions IS where scheduled dividing lines DL intersect, and in addition, since the resin forming the resin layer 2 is removed in a manner so that one part thereof remains as a residue (for example, the bonding agent 24 remains) at the bottom of the processing groove 25, the heat damage applied to the brittle material layer 1 decreases. Thus, in the brittle material removing step, when the brittle material layer 1 is irradiated with the laser beam L2 oscillated from the ultrashort pulsed laser source 30 to form the processing mark 11, it is difficult for a crack to occur in an end face (end face in the vicinity of the intersection region IS of the scheduled dividing lines DL) of the brittle material layer 1.

Note that, in the dividing method according to the present embodiment, because the processing mark 11 formed in the brittle material removing step consists of perforation-like through holes, in order to divide the composite material 10, a composite material dividing step of applying an external force to the composite material 10 along the scheduled dividing line DL is needed after the brittle material removing step.

However, in the brittle material removing step, if the relative moving speed between the laser beam L2 oscillated from the ultrashort pulsed laser source 30 and the brittle material layer 1 along the scheduled dividing line DL is set to a low value, or the repetition frequency of the pulse oscillation of the ultrashort pulsed laser source 30 is set to a large value, through holes (long hole) that are integrally connected along the scheduled dividing line DL will be formed as the processing mark 11. Therefore, if a residue is not left at the bottom of the processing groove 25 in the resin removing step, the composite material 10 will be divided even without applying an external force along the scheduled dividing line DL after removing the brittle material.

Hereunder, one example of results obtained by performing a test in which the composite material 10 was divided using the dividing method according to the present embodiment (Examples 1, 2) and a dividing method according to Reference Example will be described.

<Example 1>

In Example 1, first, a polyvinyl alcohol-based film was dyed with a dichroic material such as iodine or a dichroic dye and the film was also uniaxially stretched to obtain a polarizer. The thickness of the polarizer was 28 $\mu$m.

Next, an acrylic-based protective film (thickness: 40 $\mu$m) was bonded to one side of the polarizer, and a triacetylcellulose-based protective film (thickness: 30 $\mu$m) was bonded to the other side to obtain the polarizing film 21. Next, a polyethylene terephthalate release film (thickness: 38 $\mu$m) as the release liner 23 was bonded to the polarizing film 21 via an acrylic-based pressure-sensitive adhesive (thickness: 30 $\mu$m) as the pressure-sensitive adhesive 22 to thus obtain the main body of the resin layer 2.

On the other hand, a glass film (manufactured by Nippon Electric Glass Co., Ltd.; trade name "OA-10G"; thickness: 100 $\mu$m) was prepared as the brittle material layer 1.

Further, as the bonding agent 24, an epoxy-based bonding agent was prepared by mixing 70 parts by weight of Celoxide 2021P (manufactured by Daicel Chemical Industries Limited), 5 parts by weight of EHPE 3150, 19 parts by weight of ARON OXETANE OXT-221 (manufactured by Toagosei Company, Limited), 4 parts by weight of KBM-403 (manufactured by Shin-Etsu Chemical Co., Ltd.), and 2 parts by weight of CPI-101A (manufactured by San-Apro Ltd.).

Next, the aforementioned brittle material layer 1 and the aforementioned main body of the resin layer 2 were bonded via the aforementioned bonding agent 24. At such time, the main body of the resin layer 2 was disposed so that the acrylic-based protective film was on the brittle material layer 1 side. Next, the bonding agent 24 was irradiated with ultraviolet rays (500 mJ/cm$^2$) using a high-pressure mercury lamp to cure the bonding agent 24, thereby obtaining the composite material 10. The thickness of the bonding agent 24 after curing was 5 $\mu$m.

After making the composite material 10 obtained as described above into a sheet-like shape, the resin removing step was executed. Specifically, TLSU-series (oscillation wavelength: 9.4 $\mu$m; power of laser beam L1: 250 W) manufactured by Takei Electric Industries Co., Ltd. was used as a laser beam processing device equipped with an optical system and a control device for controlling scanning of the CO$_2$ laser source 20 and the laser beam L1, the output of the laser beam L1 oscillated from the CO$_2$ laser source 20 was set to 20 W, and the laser beam was condensed to a spot diameter of 100 $\mu$m using a condensing lens and irradiated onto the resin layer 2 along scheduled dividing lines (plurality of scheduled dividing lines that were set in a grid pattern) DL of the composite material 10. The relative moving speed (processing speed) of the laser beam L1 with respect to the composite material 10 was set to 500 mm/sec. By this means, resin forming the resin layer 2 was removed, and the processing groove 25 was formed along the scheduled dividing line DL. At this time, the resin was removed in a manner so that a part of the resin forming the resin layer 2 remained as a residue (thickness: 10 to 20 $\mu$m) at the bottom of the processing groove 25. Further, a configuration was adopted so that, in regions IS where the scheduled dividing lines DL intersected, when the laser beam L1 was about to be scanned for the second time, the output of the laser beam L1 was controlled to 0% to ensure that the laser beam L1 was not irradiated multiple times onto a region IS where the scheduled dividing lines DL intersected.

After the aforementioned resin removing step, the brittle material removing step was executed. Specifically, as the ultrashort pulsed laser source 30, a laser source having an oscillation wavelength of 1064 nm, a pulse width of the laser beam L2 of 10 picoseconds, a repetition frequency of pulse oscillation of 50 kHz, and average power of 10 W was used to irradiate the brittle material layer 1 of the composite material 10 with the laser beam L2 oscillated from the ultrashort pulsed laser source 30 from the opposite side (brittle material layer 1 side) to the processing groove 25 via a multi-focus optical system. When the relative moving speed (processing speed) of the laser beam L2 with respect to the composite material 10 was set to 100 mm/sec and the laser beam L2 was scanned along the scheduled dividing lines DL, perforation-like through holes (with a diameter of about 1 to 2 $\mu$m) having a pitch of 2 $\mu$m were formed as the processing mark 11.

When the end face of the brittle material layer 1 after the brittle material removing step was visually observed, it was confirmed that a crack had not occurred.

Next, the composite material dividing step was executed by performing mechanical breaking (mountain-folding), and the composite material 10 was thereby divided. When the end face of the brittle material layer 1 after dividing was visually observed, similarly to after the brittle material removing step, it was confirmed that a crack had not occurred.

<Example 2>

The composite material 10 was divided under the same conditions as in Example 1 except that, in the resin removing step, the output of the laser beam L1 oscillated from the $CO_2$ laser source 20 was set to 23 W and the resin was removed in a manner so that a residue did not remain at the bottom of the processing groove 25.

When the end face of the brittle material layer 1 after the brittle material removing step was visually observed, it was confirmed that a crack had not occurred.

Further, when the end face of the brittle material layer 1 after executing the composite material dividing step by performing mechanical breaking (mountain-folding) was visually observed, similarly to after the brittle material removing step, it was confirmed that a crack had not occurred.

<Reference Example>

The composite material 10 was divided under the same conditions as in Example 1 except that, in the resin removing step, at the time of scanning the laser beam L1 for a second time on the region IS in which scheduled dividing lines DL intersected also, the output of the laser beam L1 was controlled to the same output (20 W) as the output at the time of the first scanning and when scanning other regions, and the laser beam L1 was irradiated twice on the intersection region IS.

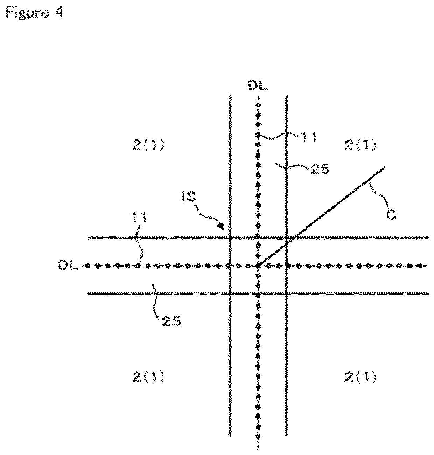

When the end face of the brittle material layer 1 after the brittle material removing step was visually observed, as schematically illustrated in Figure 4, it was confirmed that a crack C had occurred in the end face in the vicinity of the intersection region IS.

Further, when the end face of the brittle material layer 1 after executing the composite material dividing step by performing mechanical breaking (mountain-folding) was visually observed, it was confirmed that, in the end face in the vicinity of the intersection region IS, chipping of the brittle material layer 1 had occurred for which the crack C acted as a starting point.

[Reference Signs List]

| | |
|---|---|
| 1 | Brittle Material Layer |
| 2 | Resin Layer |
| 10 | Composite Material |
| 11 | Processing Mark |
| 20 | $CO_2$ Laser Source |
| 21 | Polarizing Film |
| 24 | Bonding Agent |
| 25 | Processing Groove |
| 30 | Ultrashort Pulsed Laser Source |
| C | Crack |
| DL | Scheduled Dividing Line |
| IS | Region Where Scheduled Dividing Lines Intersect |
| L1 | Laser Beam |
| L2 | Laser Beam |

**Claims**

**1.** A method for dividing a composite material in which a brittle material layer and a resin layer are laminated, the method comprising:

a resin removing step of irradiating the resin layer with a laser beam oscillated from a laser source along scheduled dividing lines of the composite material to remove resin forming the resin layer, to thereby form a processing groove along the scheduled dividing lines; and

after the resin removing step, a brittle material removing step of irradiating the brittle material layer with a laser beam oscillated from an ultrashort pulsed laser source along the scheduled dividing lines to remove a brittle material forming the brittle material layer, to thereby form a processing mark along the scheduled dividing lines, wherein in the resin removing step, in a region where the scheduled dividing lines intersect, the laser beam oscillated from the laser source is not irradiated multiple times, or an irradiation amount of the laser beam is decreased relative to an irradiation amount of the laser beam in a region other than a region where the scheduled dividing lines intersect.

2. The method for dividing a composite material according to claim 1, wherein in the resin removing step, the resin forming the resin layer is removed in a manner so that a part of the resin remains as a residue at a bottom of the processing groove.

3. The method for dividing a composite material according to claim 2, wherein a thickness of the residue is 1 to 30 $\mu$m.

4. The method for dividing a composite material according to any one of claims 1 to 3, further comprising:
after the brittle material removing step, a composite material dividing step of applying an external force to the composite material along the scheduled dividing lines to thereby divide the composite material.

5. The method for dividing a composite material according to any one of claims 1 to 4, wherein in the brittle material removing step, the brittle material layer is irradiated with the laser beam oscillated from the ultrashort pulsed laser source from an opposite side to the processing groove formed in the resin removing step.

6. The method for dividing a composite material according to any one of claims 1 to 5, wherein a thickness of the brittle material layer is 50 to 150 $\mu$m.

7. The method for dividing a composite material according to any one of claims 1 to 6, wherein the laser source used in the resin removing step is a $CO_2$ laser source.

8. The method for dividing a composite material according to any one of claims 1 to 7, wherein the brittle material layer includes glass, and the resin layer includes a polarizing film.

Figure 1A

Figure 1B

Figure 1C

Figure 2A

Figure 2B

Figure 3A

Figure 3B

Figure 4

**INTERNATIONAL SEARCH REPORT**

| International application No. |
| --- |
| PCT/JP2020/006412 |

A. CLASSIFICATION OF SUBJECT MATTER
Int.Cl. C03B33/033(2006.01)i, C03B33/07(2006.01)i, C03B33/09(2006.01)i,
B28D5/00(2006.01)i, B23K26/364(2014.01)i, G02B5/30(2006.01)i,
G02F1/1335(2006.01)i
FI: C03B33/07, C03B33/09, C03B33/033, B23K26/364, B28D5/00Z, G02B5/30,
G02F1/1335
According to International Patent Classification (IPC) or to both national classification and IPC

B. FIELDS SEARCHED

Minimum documentation searched (classification system followed by classification symbols)
Int.Cl. C03B33/00-33/14, B28D5/00, B23K26/00-26/70, G02B5/30, G02F1/1335

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2011-178636 A (MITSUBOSHI DIAMOND INDUSTRIAL CO., LTD.) 15.09.2011 (2011-09-15), entire text | 1-8 |
| A | JP 2017-145188 A (NITTO DENKO CORPORATION) 24.08.2017 (2017-08-24), entire text | 1-8 |
| A | JP 2018-170474 A (MITSUBOSHI DIAMOND INDUSTRIAL CO., LTD.) 01.11.2018 (2018-11-01), entire text | 1-8 |
| A | JP 2012-240881 A (MITSUBOSHI DIAMOND INDUSTRIAL CO., LTD.) 10.12.2012 (2012-12-10), entire text | 1-8 |
| A | JP 2014-105147 A (MITSUBOSHI DIAMOND INDUSTRIAL CO., LTD.) 09.06.2014 (2014-06-09), entire text | 1-8 |
| A | JP 2018-519229 A (CORNING INC.) 19.07.2018 (2018-07-19), entire text | 1-8 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09.04.2020 | 21.04.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

Information on patent family members

International application No.

PCT/JP2020/006412

```
JP 2011-178636 A   15.09.2011    (Family: none)

JP 2017-145188 A   24.08.2017    (Family: none)

JP 2018-170474 A   01.11.2018    KR 10-2018-0111496 A
                                 whole document
                                 CN 108705208 A
                                 TW 201902607 A

JP 2012-240881 A   10.12.2012    CN 102786214 A
                                 whole document
                                 KR 10-2012-0129761 A
                                 TW 201247575 A

JP 2014-105147 A   09.06.2014    CN 103846554 A
                                 whole document
                                 KR 10-2014-0071220 A
                                 TW 201420249 A

JP 2018-519229 A   19.07.2018    US 2018/0057390 A1
                                 whole document
                                 WO 2016/154284 A1
                                 EP 3274306 A1
                                 TW 201703912 A
                                 KR 10-2017-0131586 A
                                 CN 107922237 A
```

Form PCT/ISA/210 (patent family annex) (January 2015)

**EP 4 001 230 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013175767 A
- JP 2011178636 A
- JP 6239461 B
- JP 2012073580 A

**Non-patent literature cited in the description**

- **JOHN LOPEZ et al.** GLASS CUTTING USING ULTRASHORT PULSED BESSEL BEAMS. *International Congress on Applications of Lasers & Electro-Optics (ICALEO),* October 2015, https: //www.researchgate.net/publication/284617626_GLASS_CUTTING_USING_ULTRASHORT_PULSED_BESSEL_BEAMS